# EUROPEAN PATENT APPLICATION

(11) **EP 1 739 121 A2**
(43) Date of publication of application: **03.01.2007**
(21) Application number: 06013363.4
(22) Date of filing: 28.06.2006
(51) Int. Cl.: C08K 5/00, C08K 3/26

(54) **Polyolefin resin composition, method of inhibiting generation of gel from the same, support for image recording material and method of producing the same**

(30) Priority: 30.06.2005 JP 2005192160
(71) Applicant: Fuji Photo Film Co., Ltd., Minami-Ashigara-shi, Kanagawa (JP)
(72) Inventor: Kato, Atsushi, Fujinomiya-shi Shizuoka-ken (JP); Kato, Shinji, Fujinomiya-shi Shizuoka-ken (JP); Yamashita, Teruo, Fujinomiya-shi Shizuoka-ken (JP)
(74) Representative: HOFFMANN EITLE

(57) **Abstract**

There provides a polyolefin resin composition comprising a secondary antioxidant and substantially not including a primary antioxidant as an antioxidant, a method of inhibiting the generation of gel from the polyolefin resin composition, a support for an image recording material which is used to produce an image forming material and a method of producing the support.

## Description

### BACKGROUND OF THE INVENTION

### Field of the Invention

The present invention relates to a polyolefin resin composition, a method of inhibiting the generation of gel from the polyolefin resin composition, a support for an image recording material which is used to produce an image forming material and a method of producing the support.

### Description of the Related Art

A method in which a resin capable of forming a film is melted and extruded on a substrate such as paper, a resin base or a metal base such as aluminum to coat the surface of the substrate is in widespread use. Resin coated paper for, for example, food containers, package materials, printing paper and supports for photography is well known.

Conventionally, silver halide photosensitive materials have been required to have water resistance, solvent resistance and resistance to acids and alkalis because they are manufactured by respective steps of developing, fixing and washing with water. As the support for these photosensitive materials, a support is used in which both surfaces of a substrate are coated with a polyethylene type resin or the like.

In recent years, photograph-like characteristics have also been demanded of ink jet recording materials, sublimating-type heat transfer materials, heat sensitive recording materials and electrophotographic materials. In order to impart glossiness and water resistance, a support in which one surface or both surfaces of a substrate are coated with a resin is used as the support is a component of these materials.

When a molten polyethylene type resin is extruded to coat substrate paper, this process is usually carried out at a temperature considerably higher than the melting point of the polyethylene type resin. For example, the melting point of low-density polyethylene is about 105 to 110°C and the melting point of high-density polyethylene is about 120 to 130°C, whereas a molten extrusion process according to a T-die method is carried out at a temperature close to 300°C to form a thin film.

It is known that a polyethylene molecule usually contains, besides a straight-chain carbon forming a polymer of an ethylenic monomer, unsaturated bonds such as a carbon-carbon double bond and a side-chain carbon bonded with a methyl group or a higher carbon skeleton.

Therefore, temperatures close to 300°C are proper temperatures for polyethylene from the viewpoint of processing suitability. However, in this temperature range, molecular level activation is promoted. Actually, lengthy duration of an operation causes the molten polyethylene type resin to be put into a state allowing radicals to be easily generated in the vicinity of unsaturated bonds and side-chain carbons by factors such as changes in the fluidity of the molten polyethylene type resin and these radicals give rise to a chain reaction followed by a crosslinking reaction, resulting in frequent generation of gel-like defects when the resin is extruded as a film. In the case of resin-coated paper coated with a resin, this gel appears as a projection on the surface of the coated paper, and not only damages the outward appearance but also causes various hindrances to the functions of the recording material.

Further, with materials for recording on, for example, food containers and printing sheets, problems arise such as inferior printing and peeling of a resin part from a base paper constituting the substrate caused by inferior adhesion there between when a gel is present on the resin part.
In the case of producing, in particular, image recording materials, for example, silver halide photosensitive materials, ink jet recording materials, sublimating-type heat transfer materials and heat sensitive recording materials, the presence of a gel itself lowers the quality of a formed image and is a cause of defects such as a cissing defect when coating the solution used for the production of an image recording material such as a silver halide photosensitive material. When normal image forming ability is impaired, the product value of an image forming material is sometimes lost.

In order to prevent gel generation, it is possible to operate with a lower extrusion processing temperature. In this process, however, the adhesion between a polyethylene resin and paper is reduced. Therefore, in order to maintain the required adhesion, processing speed is limited and productivity is therefore reduced.

Further, it is also effective to carry out disassembling and cleaning by taking screws and the like out of an extruder to clean the extruder in a short cycle. However, it is not possible to avoid reduction of productivity by this method.

Therefore, generally, in the formation of polyethylene resin film or in the formation of a thin film, an antioxidant is added to prevent both screw staining and the generation of gel, and there are many cases in which the addition of the antioxidant produces an improvement effect.

The above antioxidant is usually classified by function into a primary antioxidant which serves to inhibit radical chaining and a secondary antioxidant which serves as a peroxide decomposer. A phenolic antioxidant is mainly used as the primary antioxidant for a thermoplastic resin, and a phosphorus type or sulfur type antioxidant is mainly used as the secondary antioxidant for a thermoplastic resin. These antioxidants are used in such a manner that the primary antioxidants are used singly or the primary antioxidants are used in combination with the secondary antioxidants.

Further, in the case of using resin coated paper obtained by coating the surface of a substrate such as base paper with a polyethylene resin, as the support for an image forming material such as an ink jet recording material, sublimating-type heat transfer material or heat sensitive recording material, a high density polyethylene having a high melting point is used as the polyethylene resin to regulate the curling of the support and also to regulate, for example, the smoothness, heat resistance and scratching resistance of the resin layer.

Methods of producing high-density polyethylene include a method in which ethylene monomers are polymerized (for example, precipitation polymerization) using an organic metal mixed catalyst (for example, a Ziegler-Natta catalyst) such as a compound of a metal of group IV of the periodic table or the group VIII subfamily and a metal of group I or the group IV main-group at atmospheric pressure or under pressure in an inert solvent at 150°C or less (see, for example, Japanese National Phase Publication No. 9-510485). As mentioned above, a catalyst is usually used to obtain high-density polyethylene by polymerization. If the activity of this catalyst remains, there are cases in which this gives rise to problems such as corrosion inside of an extruder and the generation of gel and, therefore, a catalyst deactivating agent is usually used. As the catalyst deactivating agent, hydrotalcites compounds are used as inorganic types and calcium stearate is used as an organic type.

When resin-coated paper is produced using high-density polyethylene, at temperatures close to 300°C the decomposition of high-density polyethylene is promoted and gel tends to be generated and, therefore, the primary antioxidants are used singly or in combination with the secondary antioxidants as described above. However, the effect of the addition of antioxidants is still unsatisfactory.

### SUMMARY OF THE INVENTION

The present invention has been made in view of the above circumstances and provides a polyolefin resin composition, a method of inhibiting the generation of gel from the polyolefin resin composition, a support for an image recording material and a method of producing the support.

A first aspect of the invention provides a polyolefin resin composition comprising, as an antioxidant, a secondary antioxidant and substantially not including a primary antioxidant as an antioxidant.
A second aspect of the invention provides a support for an image recording material comprising a substrate wherein at least a part of one surface or both surfaces of the substrate is coated with the polyolefin resin composition.
A third aspect of the invention provides a method of producing the support for an image recording material, the method comprising extruding the polyolefin resin composition on a substrate by a melt extruder and coating at least a part of one surface or both surfaces of the substrate with the polyolefin resin composition.
A fourth aspect of the invention provides a method of inhibiting the generation of gel of a polyolefin resin composition, the resin composition comprising a secondary antioxidant and substantially not including a primary antioxidant as an antioxidant.

### DETAILED DESCRIPTION OF THE INVENTION

In conventional cases where the gelation of a polyolefin resin and the generation of stains are limited, it is generally thought to be rather effective to use a primary antioxidant and it is therefore a common practice to use a primary antioxidant also when a secondary antioxidant is used. However, this invention that has been attained as a result of daringly focusing on the above teachings establishes technologies to inhibit gelation and stains by making a structure in which only a secondary antioxidant is selectively used without using a primary antioxidant.

The present invention uses a secondary antioxidant and substantially not including a primary antioxidant as an antioxidant of a polyolefin resin (particularly, high-density polyethylene) constituting a polyolefin resin composition or a polyolefin resin film with which a substrate is coated. The invention will be explained in detail.

The polyolefin resin composition of the invention comprises at least substantially singly a secondary antioxidant as an antioxidant. The polyolefin resin composition more preferably contains at least high-density polyethylene as a polyethylene component and the secondary antioxidant in a high-density polyethylene and more preferably contains a hydrotalcites compound. Also, the polyolefin resin composition may also be constituted using other components including other resin components such as low-density polyethylene, a white pigment such as TiO₂ and ZnO, a blue pigment such as ultramarine blue and a fluorescent whitening agent.

Examples of the polyolefin resin include polyethylene resins such as high-density polyethylene (HDPE), low-density polyethylene (LDPE) and polypropylene resin. According to the aspect of the invention, a polyethylene resin is preferable and high-density polyethylene (HDPE) is particularly preferable in the point of developing the effect of the invention noticeablly.

The above high-density polyethylene (HDPE) is preferably obtained by polymerization using a catalyst (preferably, an organic metal mixture catalyst such as a Ziegler-Natta catalyst). For example, the high-density polyethylene can be obtained by polymerization using an organic metal mixture catalyst, for example, precipitation polymerization. As the catalyst, a Ziegler-Natta catalyst is usually used in the production of polyethylene according to a low-pressure method.

The polymerization reaction may be run under an atmosphere or under a pressure of about 5×10⁵ Pa at a temperature of 150°C or less in an inert solvent (for example, aromatic hydrocarbon, saturated aliphatic hydrocarbon and alicyclic hydrocarbon). As the organic metal mixture catalyst, Ziegler/Natta type (Al(Mg)/Ti type) = an optional combination of the following "at least one of the following A-C group" and "at least one of the following D-G group" is used.
A: Trialkylaluminum compounds
B: Alkylaluminum halides
C: Any one of magnesium chloride, triethylaluminum, aluminum trichloride, diethylaluminum chloride, tris(2-methylpropyl)aluminum and diethylmagnesium.
D: Titanium chloride (III)
E: Titanium Chloride (IV)
F: Titanate ester
G: Any one of vanadium trichloride or vanadium tribromide, vanadium tetrachloride, zirconium tetrachloride or zirconium tetrabromide, VOCl₂, VOCl₃, vanadium = triacetylactonate, dichlorotitanocene, dichlorozirconocene, titanium (III) chloride/methyltitanium trichloride mixture and magnesium chloride-modified titanium (N) chloride catalyst.

Also, high-density polyethylene (HDPE) may be produced by vapor phase polymerization. In this case, the polymerization reaction is run at a temperature range from 85 to 100°C under a pressure of about 3.5 MPa. Examples of the catalyst include transition metal compounds such as titanium (N) chloride applied to a high-purity magnesium anhydride compound.

As to the melt flow rate (MFR) of the polyethylene (including high-density polyethylene), those having a melt flow rate of 2 to 80 g/10 minutes which is measured according to JIS 7201, which is incorporated herein by reference, are preferable.

The polyolefin resin may be those improved in opacity, whiteness and hue by adding, according to the need, rutile type or anatase type titanium oxide, a fluorescent whitening agent and ultramarine blue in the polyethylene forming a resin coating film obtained by coating a support. Here, the content of titanium oxide is preferably about 3 to 40% by weight and more preferably 4 to 30% by weight based on polyethylene.

The polyethylene resin may include, besides high-density polyethylene, other resin components such as low-density polyethylene (for example, LDPE and L-LDPE).
The proportion of the high-density polyethylene (HDPE) in the polyethylene resin is preferably 10 to 100% by weight and more preferably 30 to 90% by weight. If the proportion of HDPE using a catalyst in its polymerization is large, a gel is easily generated. When the proportion of HDPE is designed to fall in the above range, the effect of the invention, especially the effect of preventing the generation of a gel is particularly produced and it is therefore effective.

The invention has the structure in which as the antioxidant for the polyolefin resin (particularly, high-density polyethylene), a secondary antioxidant is selectively used and a primary antioxidant is substantially not included. Here, the description "a primary antioxidant is substantially not included" means that the primary antioxidant is not important as the antioxidant used to produce the effect of the invention. Specifically, the description means that the content of the primary antioxidant is less than 100 ppm, preferably less than 10 ppm, more preferably less than 1 ppm and ideally none.

Unlike the conventional methods in which primary antioxidants are used singly or in combination with a secondary antioxidant, a secondary antioxidant is only used in the invention (preferably, heated to 25°C or more and extruded), whereby the generation of a gel and sticking of stains to the parts (for example, a screw) in an extruder can be inhibited efficiently. This makes it possible to outstandingly improve the quality and productivity of an image recording support to be manufactured.

Here, the secondary antioxidant is a compound having the ability of decomposing peroxides produced from the polyolefin resin (including polyethylene resins such as high-density polyethylene). On the other hand, the primary antioxidant is antioxidants (mainly, phenolic type or amine type antioxidants) that are usually used to prevent oxidation deterioration of polyolefin resins (especially, polyethylene resins). The primary antioxidants are used to terminate a radical reaction (autoxidation) by trapping radicals generated in the initial stage of the oxidation deterioration.

Examples of the above secondary antioxidant include phosphorus type antioxidants and sulfur type antioxidants such as a thioether type and thioester type. Among these antioxidants, phosphorous type antioxidants are preferable.

Examples of the phosphorous type antioxidants may include antioxidants represented by the following formulae.

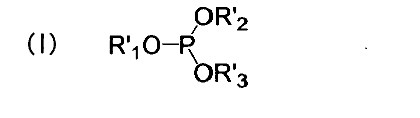

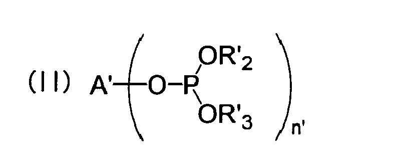

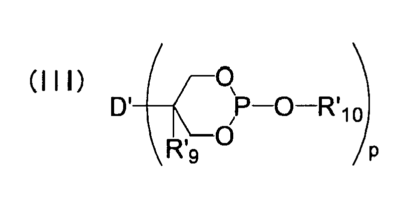

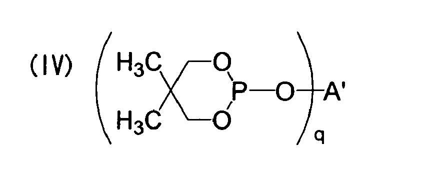

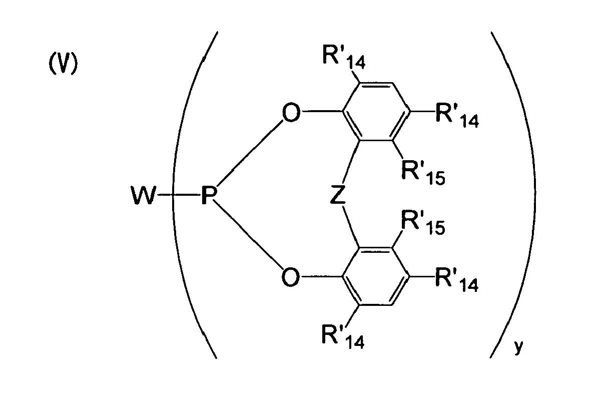

In the above formulae (I) and (II), R'₁, R'₂ and R'₃ respectively represent an alkyl group which has 1 to 18 carbon atoms and is substituted with an alkyl group having 1 to 18 carbon atoms, a halogen atom, -COOR'₄, -CN or -CONR'₄R'₄; an alkyl group which has 2 to 18 carbon atoms and is interrupted by -S-, -O- or -NR'₄-; a cycloalkyl group having 5 to 8 carbon atoms; a phenyl group or a naphthyl group; a phenyl group or a naphthyl group which are substituted with a halogen atom or 1 to 3 alkyl groups or alkoxy groups having 1 to 18 carbon atoms in total; a 2,2,6,6-tetramethylpiperide-4-yl group; an N-aryl, N-benzyl- or N-alkyl-2,2,6,6-tetramethylpiperide-4-yl group having 1 to 4 carbon atoms at the alkyl part, an N-alkanoyl-2,2,6,6-tetramethylpiperide-4-yl group having 1 to 4 carbon atoms at the alkyl part, an N-alkylene-2,2,6,6-tetramethylpiperidyl group or an N-alkylene-4-alkoxy-2,2,6,6-tetramethylpiperidyl group having 1 to 3 carbon atoms at the alkylene part or having 1 to 18 carbon atoms at the alkoxy part.

Each R'₄ respectively represents a hydrogen atom, an alkyl group having 1 to 18 carbon atoms, a cycloalkyl group having 5 to 12 carbon atoms or a phenylalkyl group having 1 to 4 carbon atoms at the alkyl part.

In the above formula (II), n' denotes an integer of 2, 3 or 4, and in the above formula (N), q denotes an integer of 2 or 3.
In the formulae (II) and (N), A' represents an alkylene group having 2 to 12 carbon atoms, an alkylene group which has 2 to 12 carbon atoms and is interrupted by -S-, -O- or -NR'₄- (R'₄ is the same as that defined above) or the following group when n' or q denotes an integer of 2. Also, when n' or q denotes an integer of 3, A' represents -CᵣH₂ᵣ₋₁- (r denotes an integer of 5 or 6) or N(CH₂CH₂-)₃. When n' denotes an integer of 4, A' represents N(CH₂-)₄.

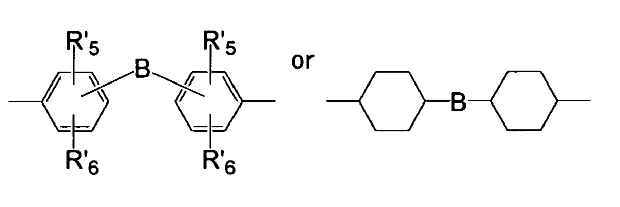

R'₅ and R'₆ in the above group respectively represent a hydrogen atom or an alkyl group having 1 to 8 carbon atoms, and B represents -CHR'₄-, -CR'₁R'₄-, -CH₂-, -S- or a single bond (here, R₁' and R'₄ are the same as those defined above).

In the above formula (III), p denotes an integer of 1 or 2, D' represents a methyl group when p denotes an integer of 1, and D' represents -CH₂OCH₂- when p denotes an integer of 2. R'₉ represents a methyl group and R'₁₀ has the same meaning as R'₁.

In the above formula (v), y denotes an integer of 1, 2 or 3. W represents an alkyl group having 1 to 18 carbon atoms, -OR'₁₆, -NR'₁₇R'₁₈ or a fluorine atom when y denotes an integer of 1, and W represents -O-A"-O- or the following group when y denotes an integer of 2, and W represents R'₄(CH₂O-)₃, N(C₂H₄O-)₃ or N(C₃H₆O-)₃ (where R'₄ is the same as that defined above) when y denotes an integer of 3.

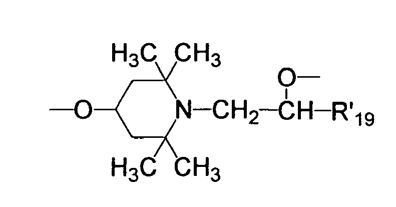

The above R'₁₆ has the same meaning as the above R'₁. R'₁₇ and R'₁₈ respectively represent an alkyl group having 1 to 18 carbon atoms, a benzyl group, a cyclohexyl group, a 2,2,6,6-tetra or 1,2,2,6,6-pentamethylpiperide-4-yl group or R'₁₇ and R'₁₈ may be combined with each other to represent a butylene group, a pentylene group, a hexylene group or -CH₂CH₂-O-CH₂CH₂-. When y denotes an integer of 2, A" has the same meaning as the above A'.
R'₁₉ in the above group represents a hydrogen atom or a methyl group.

Each R'₁₄ in the above formula (v) respectively represent a hydrogen atom, an alkyl group having 1 to 9 carbon atoms or a cyclohexyl group, R'₁₅ represents a hydrogen atom or a methyl group; Z represents a single bond, -CH₂-, -C(R'₁₄)- or -S-(where R'₁₄ is the same as that defined above).

Preferable antioxidants represented by the above formula ( I ) include the antioxidant where R'₁, R'₂ and R'₃ respectively represent an alkyl group having 1 to 18 carbon atoms, a phenyl group, a phenyl group which has 1 to 18 carbon atoms and is substituted with 1 to 3 alkyl groups having 1 to 18 carbon atoms in total or a 2,2,6,6-tetramethylpiperide-4-yl group is preferable, and the case where R'₁, R'₂ and R'₃ respectively represent a phenyl group which has 1 to 12 carbon atoms and is substituted with 1 to 3 alkyl groups having 1 to 12 carbon atoms in total is particularly preferable.

Preferable antioxidants represented by the above formula (II) include the antioxidant where A' represents an alkylene group having 2 to 12 carbon atoms, -CH₂CH₂-O-CH₂CH₂-, -CH₂CH₂-O-CH₂CH₂-O-CH₂CH₂- or -CH₂CH₂-NR'₄-CH₂CH₂- when n denotes an integer of 2 and the case where A' represents N(CH₂CH₂-)₃ (where R'₄ represents an alkyl group having 1 to 4 carbon atoms) when n denotes an integer of 3 are preferable.

Preferable antioxidants represented by the above formula (III) include the antioxidant where p denotes an integer of 1, D' represents a methyl group, R'₉ represents a methyl group and R'₁₀ represents a phenyl group substituted with 1 to 3 alkyl groups and having 1 to 18 carbon atoms in total is preferable.

Preferable antioxidants represented by the above formula ( v) include the antioxidant where W represents -OR'₁₆, -NR'₁₇R'₁₈ or a fluorine atom when y denotes an integer of 1, and W represents -O-CH₂CH₂-NR'₄-CH₂CH₂-O- when y denotes an integer of 2, and W represents N(CH₂CH₂O-)₃ when y denotes an integer of 3, R'₁₆ represents an alkyl group having 1 to 18 carbon atoms, R'₁₇ and R'₁₈ respectively represent an alkyl group having 1 to 18 carbon atoms, a cyclohexyl group or a benzyl group, or R'₁₇ and R'₁₈ respectively represent a piperidyl group, a morpholinyl group or a hexamethylene imino group in combination with a nitrogen atom to be combined therewith, Z represents a single bond, -CH₂- or -CHCH₃-, and plural R'₁₄ respectively represent an alkyl group having 1 to 4 carbon atoms is preferable. In this case, R'₄ is the same as that defined above.

Particularly preferable antioxidants include the antioxidant where W represents a 2-ethylhexoxy group or a fluorine atom, R'₁₄ represents a tert-butyl group, R'₁₅ represents a hydrogen atom and Z represents -CH₂- or -CH(CH₃)- when y denotes an integer of 1, and W represents -O-CH₂CH₂-NCH₃-CH₂CH₂-O-, R'₁₄ represents a tert-butyl group, R'₁₅ represents a hydrogen atom, and Z represents -CH₂- or -CH(CH₃)-when y denotes an integer of 2.

As the phosphorous antioxidant, those having relatively low sensitivity to hydrolysis are preferable and for example, trilauryl=phosphite, trioctadecyl=phosphite, distearyl=penthaerythritil=diphosphite or tristearyl=sorbitil=triphophite are preferable.

In addition, aromatic phosphites or phosphonites are also preferable. These include an aromatic hydrocarbon group, such as phenyl group. Examples of these compounds include triphenyl=phosphite, diphenyl = alkyl = phosphite and phenyl=dialkyl=phosphite. Specific examples of the phosphites include tris(nonylphenyl)phosphite, tris(2,4-di-tert-butylphenyl)phosphite, bis(2,4-di-tert-butylphenyl)=pentaerythritil=diphosphite, tetrakis(2,4-di-tert-butylphenyl)-4,4'-biphenylene=diphosphonite and 2,2'-ethylidenebis(4,6-di-tert-butylphenyl)fluorophosphite.

Phosphites or phosphonites comprising a P-O-Ar group (Ar represents an aromatic group, particularly, a phenyl group comprising an alkyl substituent group at the ortho position of the P-O-C bond) are also preferable. Preferable examples of the alkyl substituent group include an alkyl group having 1 to 18 carbon atoms or a cycloalkyl group having 5 to 7 carbon atoms and more preferable examples include an alkyl group having 1 to 4 carbon atoms and especially, a tert-butyl group.

The following phosphite and phosphonite are particularly preferable.
Specifically, tris(2,4-di-tert-butylphenyl)phosphite and the following compounds are included.

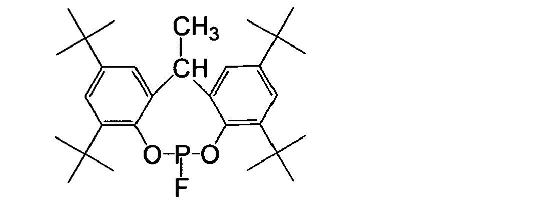

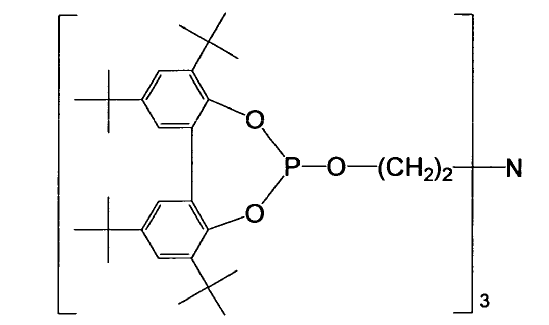

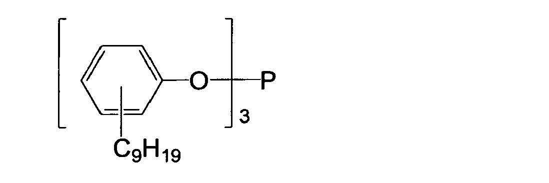

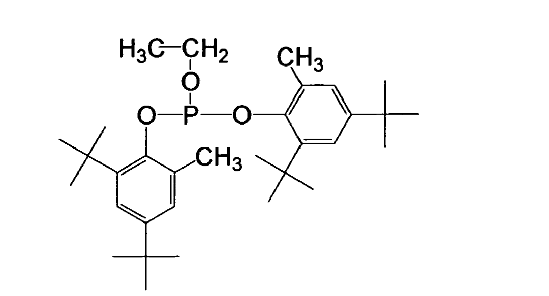

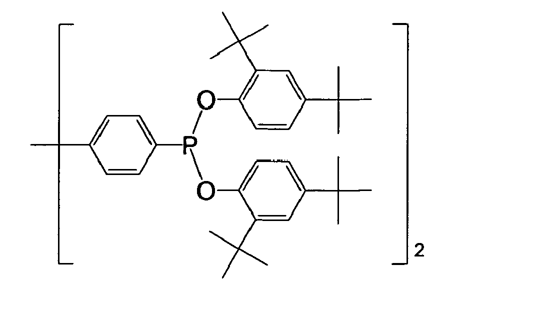

Tris(2,4-di-tert-butylphenyl)=phosphite and the following compound are particularly preferable.

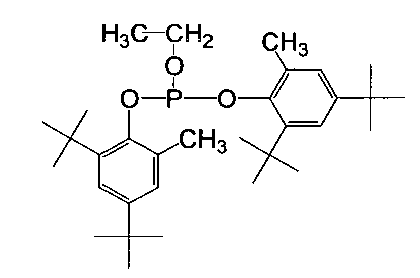

Examples of commercially available products include trade names Adekastab 2112, PEP-24, PEP-36, HP-10 (manufactured by ASAHI DENKA CO., LTD..), trade name Irgaphos 168 (Ciba Specialty Chemicals Inc.),trade name JP-650 (manufactured by Johoku Chemical Co., Ltd.), trade names Malk 2112, PEP-8, PEP-24G, PEP-36 (manufactured by Adeka Argas (sha)), trade names Weston 618, Ultranox 626 (manufactured by Borgwarner (sha),trade name HCA (manufactured by Sanko (sha)) and trade name Sandostab P-EPQ (manufactured by Sand (sha)).

The above sulfur antioxidants include thioester antioxidants and thioether antioxidants.
Examples of the above thioester antioxidants include alkyl thiodipropionate such as dilauryl thiodipropionate and dimyristyl-3,3'-thiodipropionate and alkyl thiopropionate such as lauryl thiopropionate and stearyl thiopropionate.

Examples of the above thioether type antioxidant include trade names: DLTDPE Yoshitomi, DMTD Yoshitomi and DSPT Yoshitomi (manufactured by Yoshitomi Pharmaceutical Industries, Ltd.), trade names: Sumiliser TPL, TPM, TPS and TPD (manufactured by Sumitomo Chemical Co., Ltd.), trade names: Antiox M and S (manufactured by Nippon Oil & Fats Co., Ltd.), trade name: C-nox 4125 (manufactured by Jipro (k.k.)), trade names: Malk AO-412S, AO-23, Malk 260, 329K and 522A (manufactured by Adeka Argas (sha)), trade name: Sandstab P-EPQ (manufactured by Sandstab (k.k.)), trade names: Irgaphos P-EPQ FF and Irganox 1222 (Ciba Specialty Chemicals Inc.) and trade name: Weston 399 (manufactured by Borgwarner (sha)).

The content of the secondary antioxidant (especially, a phosphorous type antioxidant) in the high-density polyethylene (HDPE) constituting an image recording material is preferably 100 ppm or more and 2000 ppm or less and more preferably 200 ppm or more and 1000 ppm or less. When the content of the secondary antioxidant falls in the above range, this is effective in the point that the coloring of the resin is reduced and there is a little influence on the adhesion between the substrate and the resin layer when the substrate is coated. Also, when the content of the secondary antioxidant falls in the above range, an oxidation deterioration is efficiently inhibited and the generation of gel in the resin (resin film) and stains of the parts (for example, a screw) in a melt extruder if this extruder is used can be limited efficiently.

The polyolefin resin composition preferably has a structure in which a hydrotalcites compound is used as a catalyst deactivating agent for the catalyst used for the high-density polyethylene. Unlike an organic deactivating agent such as calcium stearate, which produce inorganic salt coagulates by a reaction with chlorine and the like contained in the catalyst, the hydrotalcites compound that is an inorganic deactivating agent adsorbs chlorine and the like in the catalyst. The hydrotalcites compound is therefore effective to avoid a cissing defect of a coating solution formed by, for example, coating when constituting an image recording material which defect is caused by the inorganic salt coagulates and can also produce the effect of the invention more efficiently.

The above hydrotalcites compound is compounds which have a laminate structure, and are constituted of magnesium and aluminum and represented by the following compositional formula: Mg₆Al₂(OH)₁₆CO₃ · 4H₂O, Mg_{4.3}Al₂(OH)_{12.6}CO₃ · mH₂O. Examples of commercially available products of the hydrotacites compound include trade names: Alkamizer and DHT-4A (manufactured by Kyowa Chemical Industry Co., Ltd.).

The content of the above hydrotalcites compound in the high-molecular polyethylene is preferably 100 to 2000 ppm and more preferably 200 to 1000 ppm based on the amount of the high-density polyethylene.

The polyolefin resin composition of the invention may be applied to all fields using polyolefin resins and is preferably used in applications such as an image recording material support (so-called resin coated paper) constituting, particularly an image recording material.

Also, in the method of inhibiting the generation of gel from thepolyolefin resin composition according to the invention, a secondary antioxidant is used as an antioxidant together with the polyolefin resin and substantially not including a primary antioxidant is used. It is thereby possible to limit the generation of a gel efficiently when the polyolefin resin composition is prepared and used or a polyolefin resin film is formed using the polyolefin resin composition.

The support for an image recording material according to the invention is obtained by coating at least a part of one surface or both surfaces of the substrate with the polyolefin resin composition (preferably a polyethylene resin composition) and the polyolefin resin composition (preferably a polyethylene resin composition) contains at least high-density polyethylene as a polyethylene component.

The antioxidant for the above polyolefin resin, especially, high-density polyethylene may be structured, as mentioned above, by comprising substantially only a secondary antioxidant, and substantially not including a primary antioxidant, preferably comprising a hydrotalcites compound. According to the need, other components including other resin components such as low-density polyethylene, white pigments such as TiO₂ or ZnO, blue pigments such as ultramarine blue and a fluorescent whitening agent may be used to constitute the antioxidant.

The substrate constituting the support for an image recording material according to the invention is provided with a resin film (resin coating film) using a polyethylene resin in a manner as to coat at least a part (preferably, whole surface) of one surface or both surfaces thereof, and at least one side of these resin coating films is constituted of high-density polyethylene.

There is no particular limitation to the substrate constituting the support for an image recording material according to the invention and examples of the substrate include base paper such as paper and synthetic paper, resin substrates (resin base) such as polyesters such as polyethylene terephthalate and polyethylene naphthalate and polycarbonate and metal substrates (metal base) such as aluminum.

No particular limitation is imposed on the thickness and base weight of the above base paper, resin base or metal base. Generally, the thickness may be 50 to 400µm and the basic weight may be 40 to 400 g/m². Also, no particular limitation is imposed on the surface roughness and surface shape.

The base paper is obtained by paper-making using pulp stock obtained by beating desired pulp, especially, a pulp slurry beaten and regulated properly. In a paper-making step of carrying out paper-making, there is a process in which the web surface side corresponding to the surface on which a recording layer is formed on the base paper by application is dried by applying a drier canvas to a drum drier cylinder. In this process, the tensile strength of the drier canvas may be adjusted to a range from 1.5 to 3 kg/cm² to dry.

The pulp may be arbitrarily selected without particular limitation, from natural pulps selected from coniferous trees, broad-leaved trees and the like, which include LBKPs (broad-leaved tree bleached kraft pulps) such as aspen wood, acacia wood, maple wood, poplar wood and eucalyptus wood, NBKPs (coniferous tree bleached kraft pulps) such as spruce wood and Douglas fir wood, LBSPs, NBSPs, LDPs, NDPs, LUKPs and NUKPs. These materials may be used in combinations of two or more besides the case of using these materials singly.

In the invention, one (especially, the surface on the side opposite to the side on which an image recording layer is formed when the base paper is used for producing an image recording material) of the surfaces of the base paper may be provided with a back-coat layer. This back-coat layer may be structured by adding and including a white pigment, an aqueous binder and other components.

The method of producing a support for an image recording material according to the invention comprises extruding the polyolefin resin composition comprising a secondary antioxidant and substantially not including a primary antioxidant as an antioxidant, on a substrate by a melt extruder and coating at least a part of one surface or both surfaces of the substrate with the polyolefin resin composition. According to this method, the aforementioned support for an image recording material according to the invention can be manufactured most preferably. The details of the polyolefin resin, secondary antioxidant and substrate are the same as above.

When, using a melt extruder, the polyolefin resin composition is extruded on the substrate and at least a part of one surface or both surfaces of the substrate is coated with the polyolefin resin composition, substantially only a secondary antioxidant is used without using a primary antioxidant as the antioxidant. Therefore, as mentioned above, the generation of a gel in the coated film and the staining of a screw in the extruder can be limited. This is particularly effective when the polyolefin resin composition includes a polyethylene resin and high-density polyethylene is used as a part or all of the polyethylene resin. This makes it possible to improve the operability of the process and production quality, whereby the development of a high-quality product and productivity can be attained.

As the above melt extruder, a proper one may be selected from known melt extruders such as commercially available melt extruders upon use.

When the polyolefin resin (including polyethylene resins such as high-density polyethylene) is heated to extrude it, the heating temperature is preferably 250°C or more and more preferably 270 to 340°C from the viewpoint of forming a thin film with ease and preventing the generation of a gel which tends to occur according to the case and stains of the parts (for example, a screw) in an extruder.

The support for an image recording material according to the invention is produced, specifically, in the following manner. A phosphorous secondary antioxidant and a hydrotalcites compound (catalyst deactivating agent) are added to a desired high-density polyethylene (HDPE) followed by adding further low density polyethylene (LDPE) to the mixture to prepare a resin composition. The prepared resin composition is filled in a melt extruder and a rotary screw provided in the melt extruder is used to heat the mixture and/or to apply pressure to the mixture, thereby extruding the mixture on the substrate outside of the machine while melting and kneading mixture to coat the surface of the substrate such that the film is adjusted to a desired thickness.

When the resin coating film is formed by the above melt extruder, it is desirable to pretreat the base paper to make firm the adhesion between the base paper and the resin coating film prior to the melt-extrusion to form the resin coating film on the base paper. For example, an extrusion coating method may be applied in which a polyolefin rein (including a polyethylene resin such as high-density polyethylene) is extruded from an extrusion die to the surface of running base paper to form a resin film such that the base paper is coated at a nip point between a nip roller and a cooling roller and nipped to bind by crimping the resin film with the base paper.

Examples of the pretreatment include acid etching treatment using sulfuric acid-chromic acid mixture, flame treatment using gas flame, ultraviolet ray radiation treatment, corona discharge treatment, glow discharge treatment and anchor coating treatment such as alkyl titanate or the like. Appropriate treatment may be selected from these treatments freely. Particularly, corona treatment is preferable from the viewpoint of simplicity. In the case of corona treatment, it is necessary to carry out the treatment such that the contact angle of the surface of the base paper with water is 90°or less.

For the anchor coating agent the following known compounds can be used:
organic titanium related compounds, isocyanates (urethanes), polyethylene imines, and
polybutadienes. Specifically, for known organic titanium related compounds which can be used there are: alkyl titanates such as tetraisopropyl titanate, tetrabutyl titanate, and tetrastearyl titanate; titanium acylates such as butoxy titanium stearate; titanium chelates such as titanium acetyl acetonate. Also, for isocyanates (urethanes) know compounds such as the following can be used: toluene diisocyanate (TDI), diphenylmethane diisocyanate (MDI), hexamethylene diisocyanate (HMDI), xylene diisocyanate (XDI), isophorone diisocyanate (IPDI).

In the case of using an extrusion coating method, the polyolefin resin (including polyethylene resins such as high-density polyethylene) is melt-kneaded on the base paper and then, the base paper is allowed to pass between an elastic roll and a cooling roll across which a nip pressure of 2 MPa or more is applied to laminate the resin film on the base paper, whereby a resin coating film can be formed .preferably.
There is the case where fine pores (hereinafter referred to as "a crater") are formed on the surface of the resin film laminated on the base paper. However, if the number of these craters is large, not only the outward appearance of the resin film is impaired but also a gloss feel is reduced, bringing about significantly deteriorated product value. The reason of the generation of these craters is considered to be that by the influence of air entrained when the cooling roll is rotated, the entrained air is accumulated in the area between the resin film and the cooling roller, thereby forming a concave-like dent on the resin film. Then, the above craters are created more easily with a reduction in the nip pressure across the elastic roll and the cooling roll, with an increase in the line speed in the laminating process, with a reduction in the thickness of the resin coating film and with an increase in the surface roughness of the base paper.
Therefore, the generation of craters can be limited, which ensures good planeness having a smooth and gloss feel by setting the nip pressure across the elastic roll and the cooling roll to 2 MPa or more. The above nip pressure is preferably 3 MPa or more and the upper limit of the nip pressure is preferably 8 MPa.

When the aforementioned polyolefin resin composition of the invention is melt-extruded on the base paper to carry out coating, so-called embossing treatment may be carried out to use the resulting product as a support provided with a matt surface or silky surface which is obtained in usual photographic printing paper.
Specifically, it is possible to use the method described in the publication of Japanese Patent Application Laid-Open (JP-A) No. 2002-372767, Examples (Paragraph Nos. [0088] to [0090]).

The support for an image recording material according to the invention may be manufactured for example by the following two steps (1) and (2).
(1) Beating wood pulp made of LBKP to a Canadian freeness of about 300 ml by using a double disk refiner, adding a cationic starch, an alkyl ketene dimer, epoxidized aliphatic acid amide, polyaminepolyamide epichlorohydrin, higher fatty acid ester, colloidal silica and the like, to the pulp, which is then subjected to paper-making using a Fourdriner paper machine or the like, then subjecting the resulting paper to calendering treatment to adjust the thickness of the paper to obtain raw paper.
(2) Allowing the raw paper obtained in the above (1) to travel to carry out corona discharge treatment on the backface of the paper, then, laminating a layer constituted of low-density polyethylene and high-density polyethylene and the outermost layer constituted of low-density polyethylene and high-density polyethylene on the raw paper by melt extrusion using a coat hunger type two-layer simultaneous extrusion die to form a non-glossy resin layer, carrying out corona discharge treatment on the surface of the raw paper and then, laminating a layer constituted of a masterbatch prepared by kneading TiO₂ and zinc stearate in low-density polyethylene, a masterbatch prepared by kneading a bluish pigment in a low-density polyethylene and low-density polyethylene, and the outermost layer constituted of a masterbatch prepared by kneading TiO₂ and zinc stearate in low-density polyethylene, a masterbatch prepared by kneading a fluorescent whitening agent in low-density polyethylene and a masterbatch prepared by kneading a bluish pigment in low-density polyethylene on the raw paper by melt extrusion using a coat hunger type two-layer simultaneous extrusion die to form a glossy resin layer, thereby making a support for an image recording material.

No particular limitation is imposed on the preferred embodiment and use of the support for an image recording material according to the invention. The support for an image recording material may be preferably used in various applications which need the planeness of the surface, especially, a high gloss feel and smoothness, and high-quality image recording having a photograph-like feel of a material. Specifically, the support according to the invention is preferably used as support materials for ink jet recording mediums, electrophotographic image receiving materials, heat-sensitive color developing recording materials, sublimating transfer image receiving materials, heat transfer image receiving material, silver salt photosensitive materials and printing sheets.

### -Electrophotographic image receiving materials-

The electrophotographic image receiving materials have a support body for an image recording material, and on at least one of the surfaces of the support body at least one toner receiving layer (recording layer), and other appropriate layers selected as required. For example, a surface protection layer, intermediate layer, undercoat layer, cushion layer, electrostatic adjustment (prevention) layer, reflective layer, color tint adjustment layer, preservability improvement layer, adhesion prevention layer, anti-curl layer, and/or a smoothing layer. Each of these layers can be single layer structures or laminate structures.

### -Silver salt photosensitive material-

Examples of the silver salt photosensitive material include materials used in a silver halide photographic system, the materials having a structure in which at least a photosensitive layer (recording layer) that develops at least YMC on the support for an image recording material according to the invention, wherein after printing and exposing, the material is allowed to pass through plural treating tanks one by one in a dipped state to carry out color developing, breach-fixing and washing with water and dried to obtain an image.

### -Heat transfer image receiving material-

Examples of the heat transfer image receiving material include materials used in a melt transfer system, wherein the materials having a structure of at least an image receiving layer (recording layer) formed on the support for an image recording material according to the invention, wherein a heat transfer material provided with at least a heat meltable ink layer on the support is heated by a heat-sensitive head to melt and transfer the ink from the heat meltable ink layer.

### -Heat sensitive color formation recording material-

Examples of the heat-sensitive color formation recording material include materials used in a thermoautochromic system (TA system), the materials having a structure of at least a heat color formation layer (recording layer) formed on the support for an image recording material according to the invention, wherein heating using a heat-sensitive head and fixing using ultraviolet rays or the like are repeated to develop a color, thereby forming an image.

### -Sublimating transfer image receiving material-

Examples of the sublimating transfer image receiving material include materials used in a sublimating transfer system, the materials having a structure of at least an image receiving layer (recording layer) formed on the support for an image recording material according to the invention, wherein a sublimating transfer material provided with an ink layer containing at least thermally diffusible dye (sublimation dye) on the support is heated by a heat-sensitive head to transfer the thermally diffusible dye from the ink layer.

In the above electrophotographic image receiving materials, heat sensitive color formation recording materials, sublimating transfer image receiving materials, heat transfer image receiving materials or silver salt photosensitive materials, image recording layers (toner image receiving layer, heat color formation layer, image receiving layer or photosensitive layer) corresponding to each material are at least formed on the image recording material support of the invention.

Exemplary aspects of the invention are listed below.

<1> A polyolefin resin composition comprising a secondary antioxidant and substantially not including a primary antioxidant as an antioxidant.

<2> The polyolefin resin composition of the above <1>, the resin composition comprising at least high-density polyethylene, wherein the secondary antioxidant is included in the high-density polyethylene.

<3> The polyolefin resin composition of the above <2>, wherein the high-density polyethylene is obtained by polymerization using a catalyst, and the resin composition further comprises a hydrotalcite compound as a catalyst deactivating agent for the catalyst.

<4> The polyolefin resin composition of any one of the above <1> to <3>, wherein the secondary antioxidant is a phosphorous antioxidant.

<5> The polyolefin resin composition of any one of any one of he above <2> to <4>, wherein the content of the secondary antioxidant in the high-density polyethylene is 100 ppm or more and 2000 ppm or less.

<6> The polyolefin resin composition of any one of the above <3> to <5>, wherein the catalyst is a Ziegler-Natta catalyst.

<7> A support for an image recording material, the support comprising a substrate, in which at least a part of one surface or both surfaces of the substrate is coated with the polyolefin resin composition of any one of the above <1> to <12>.

<8> A method of producing a support for an image recording material, the method comprising extruding the polyolefin resin composition of any one of the above <1> to <6> on a substrate by a melt extruder and coating at least a part of one surface or both surfaces of the substrate with the polyolefin resin composition.

<9> The method of the above <8>, wherein the above extrusion is carried out at a temperature of 250°C or higher.

<10> A method of limiting the generation of gel from a polyolefin resin composition, the resin composition comprising a secondary antioxidant and substantially not including a primary antioxidant as an antioxidant.

According to the aspect of the invention, it is particularly more effective to limit the inside parts (for example, a screw) of an extruder from being stained and to limit the generation of gel in a coated resin film when a secondary antioxidant (particularly, phosphorous antioxidant) for quenching peroxides produced secondarily is singly used than when a primary antioxidant is added singly or in combination with a secondary antioxidant wherein the addition of these inhibitors is usually carried out corresponding to radicals primarily generated in association with the oxidation deterioration of a polyolefin resin including a polyethylene resin.

### EXAMPLES

The present invention will be explained in more detail by way of examples, which are not intended to be limiting of the invention. In these examples, all designations of parts and % indicate parts by weight and weight percentage (wt.%), respectively, unless otherwise noted.

### (Example 1)

A resin composition compounded of a high-density polyethylene (HDPE) (MFR (melt flow rate; the same in the following): 16.0 g/10 min., density: 0.967 g/cm³) formulated with 250 ppm hydrotalcite (trade name: DHT-4A, manufactured by Kyowa Chemical Industry Co., Ltd., catalyst deactivating agent) and 200 ppm of tris(2,4-di-t-butylphenyl)phosphite (trade name: Irgaphos 168, manufactured by Ciba Specialty Chemicals Inc., phosphorous type secondary antioxidant) and a low-density polyethylene (LDPE) (MFR: 4.0 g/10 min., density: 0.924 g/cm³), in a ratio of 50/50 (weight ratio) was discharged using a Laboplastomill (Model 30C 150, manufactured by Toyo Seiki Seisaku-sho, Ltd.) by repeating a discharge cycle of 30 r.p.m. per 1 hour and 150 r.p.m. per 1 hour six times in the following conditions: temperature set: T1/T2/T3/die = 330°C/360°C/380°C/325°C and filter plate ø1 mm x 7 holes, filter structure: 80 mesh/200 mesh/400 mesh/80 mesh, and evaluated as shown below.

### (Examples 2 to 6, Comparative Examples 1 to 16)

The discharge operation was carried out in the same manner as in Example 1 except that the types and amounts of the above HDPE, LDPE, catalyst deactivating agent and antioxidant in Example 1 were altered to those shown in Table 1, and evaluated as shown below.

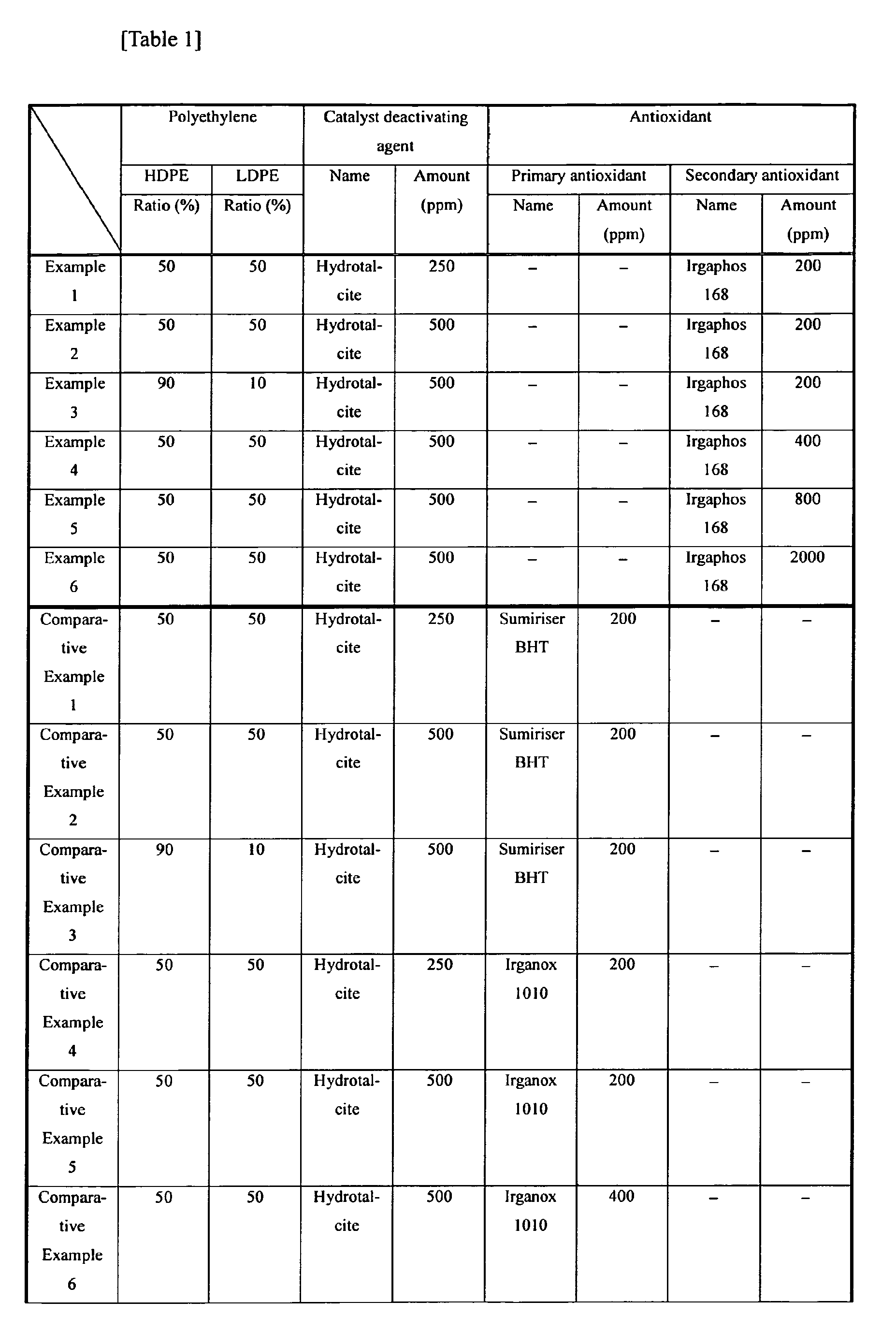

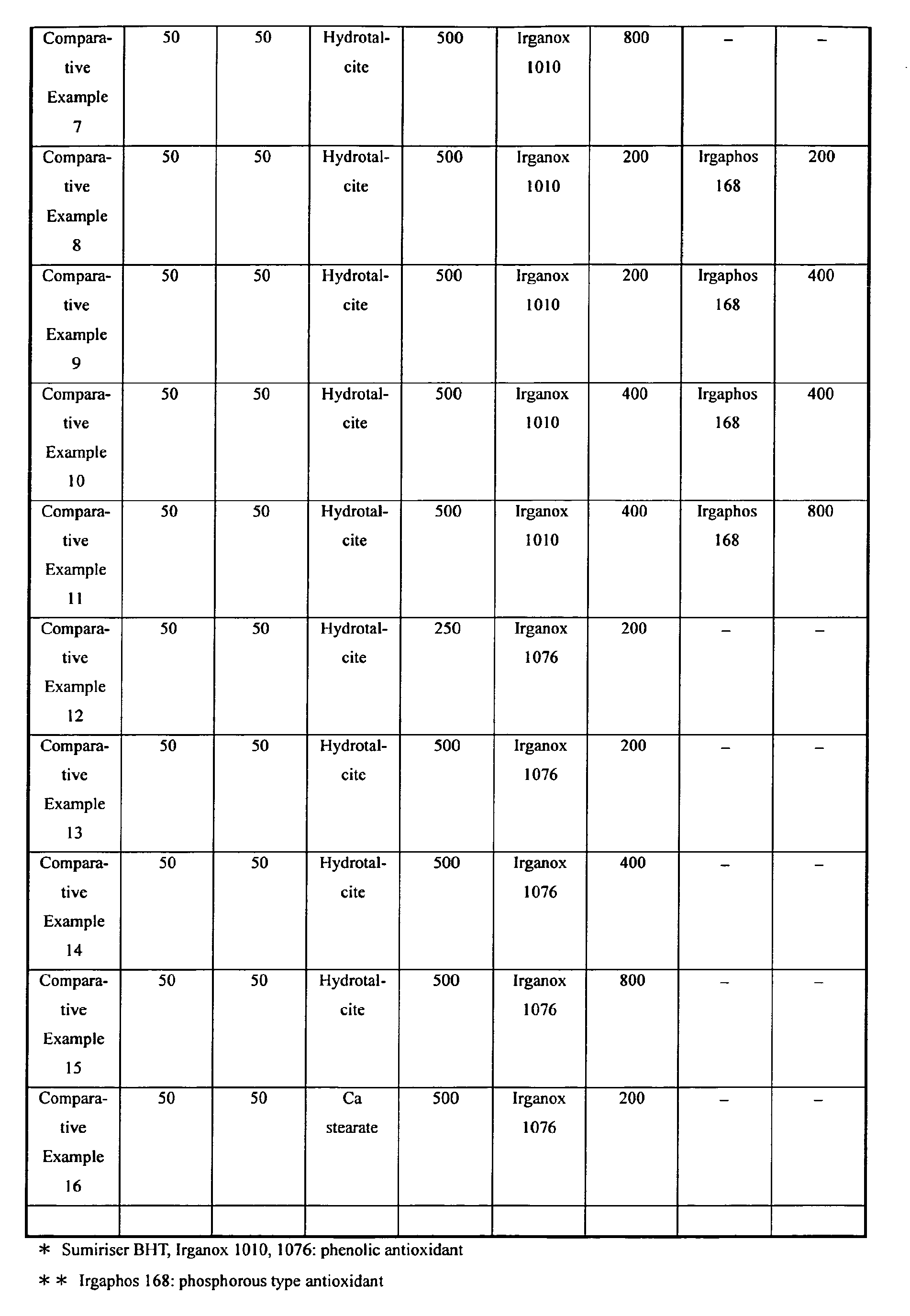

### (Evaluation)

Each Example and Comparative Example was evaluated as to the generation of gel and staining of screws.

### -Generation of gel-

When the composition was discharged at each rotation of 150 r.p.m. in six discharge cycles, after 50 minutes discharge, the degree of gel formed on the resin film was visually observed for 3 minutes to evaluate it according to the following evaluation standard.

### (Evaluation standard)

A: The generation of a gel was very small.
B : Though the generation of a gel was found, it was within a practically allowable level.
C: Generation of much gel was observed.

### -Adhesion of stains to a screw-

After the composition was discharged for 12 hours to finish the discharge cycle, the Laboplastomill was suspended in order to dismount a die and to take out a screw in conditions in which the display temperature of T1/T2/T3 was 200°C or less. The condition of brown stains stuck to the extracted screw was observed to evaluate the condition according to the following evaluation standard.

### (Evaluation standard)

A: No stain was observed.
B: Though a few stains were observed, it was within a practically allowable level.
C: Many stains were observed.

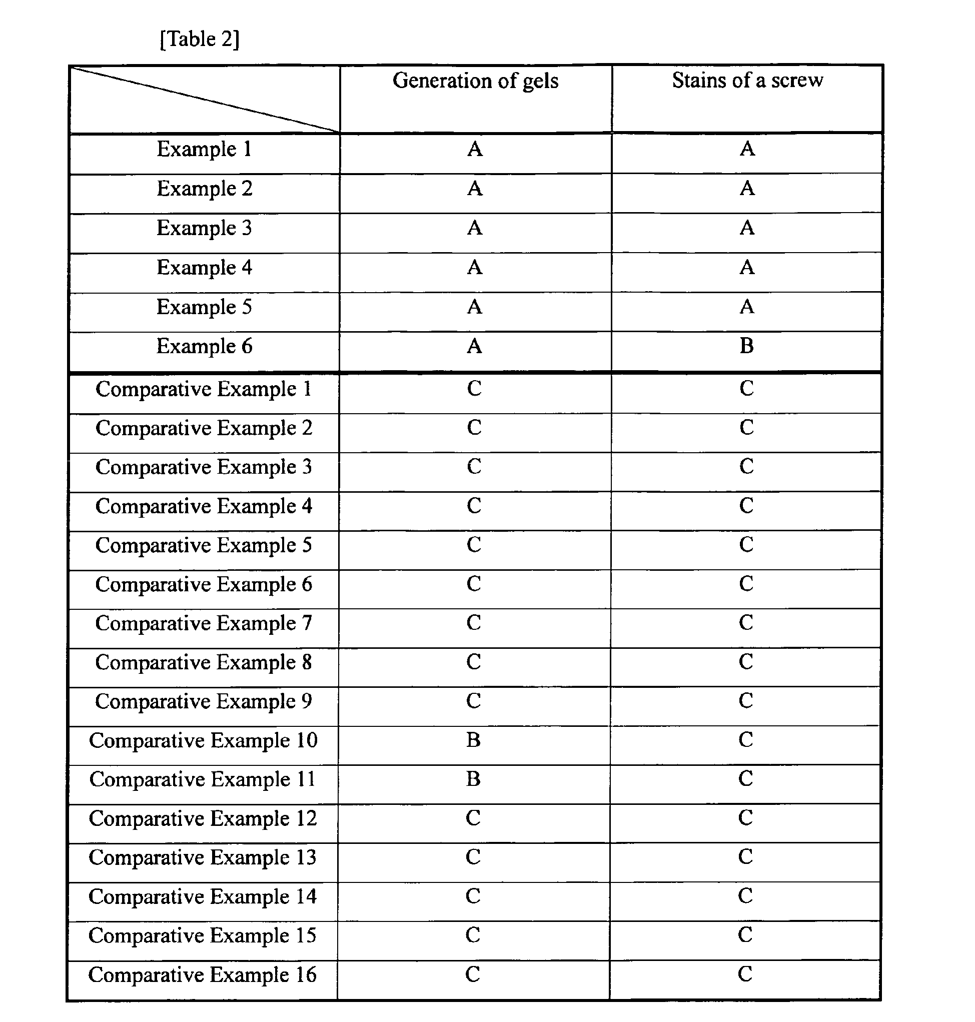

Table 2 shows that in the examples using only a secondary antioxidant without adding a primary antioxidant, the generation of gel in the resin coated layer could be effectively prevented and the adhesion of stains to a screw in an extruder could be significantly reduced. On the other hand, in the comparative examples using, as an antioxidant, a primary antioxidant singly or in combination with a secondary antioxidant, many gels were generated in the resin coated layer and also, the degree of staining of the screw in an extruder was large.

When a polyolefin resin is used at higher temperatures close to 300°C, and, particularly when the resin is melt-extruded at high temperatures such as those mentioned above to form a layer coated with the resin, an objective is to establish technologies preventing the promotion of the decomposition of a high-density polyethylene and the generation of gel. It is also desirable to establish technologies for avoiding the adhesion of stains to screws and the like in an extruder, thereby improving the quality of the resin film due to the reduction in stains and improving productivity due to a reduction in the frequency of washing of screws in the extruder, when the polyolefin type resin coated paper is produced.

Technologies effective in preventing the generation of gel in a polyolefin resin and in preventing the adhesion of stains to screws and the like in an extruder in the case of coating a substrate such as base paper with a melt extruder have not previously been proposed.

According to the present invention, there are provided a polyolefin resin composition resistant to the generation of gel, a method of limiting the generation of gel, a support for an image recording material comprising a substrate and polyolefin resin (for example, resin film) with which the substrate is coated wherein the generation of gel in the polyolefin resin is limited, and a method of producing a support for an image forming material which support can be coated with a resin which is limited in the adhesion of stains to the parts (for example, screws) in an extruder when the substrate is coated with a polyolefin resin such as a polyethylene type resin to manufacture the support for an image recording material by an extrusion melting coating method using a melt extruder.
All publications, patent applications, and technical standards mentioned in this specification are herein incorporated by reference to the same extent as if each individual publication, patent application, or technical standards was specifically and individually indicated to be incorporated by reference.

## Claims

1. A polyolefin resin composition comprising a secondary antioxidant and substantially not including a primary antioxidant as an antioxidant.

2. The polyolefin resin composition according to Claim 1, comprising at least high-density polyethylene, wherein the secondary antioxidant is included in the high-density polyethylene.

3. The polyolefin resin composition according to Claim 2, wherein the high-density polyethylene is obtained by polymerization using a catalyst, and the resin composition further comprises a hydrotalcite compound as a catalyst deactivating agent for the catalyst.

4. The polyolefin resin composition according to any one of Claims 1 to 3, wherein the secondary antioxidant is a phosphorous antioxidant.

5. The polyolefin resin composition according to any one of Claims 2 to 4, wherein the content of the secondary antioxidant in the high-density polyethylene is 100 ppm or more and 2000 ppm or less.

6. The polyolefin resin composition according to any one of Claims 3 to 5, wherein the catalyst is a Ziegler-Natta catalyst.

7. A support for an image recording material, the support comprising a substrate wherein at least a part of one surface or both surfaces of the substrate is coated with the polyolefin resin composition according to any one of claims 1 to 6.

8. A method of producing a support for an image recording material, the method comprising extruding the polyolefin resin composition according to any one of claims 1 to 6 on a substrate by a melt extruder and coating at least a part of one surface or both surfaces of the substrate with the polyolefin resin composition.

9. The method of producing a support for a image recording material according to Claim 8, wherein the extrusion is carried out at a temperature of 250°C or higher.

10. A method of limiting the generation of gel from a polyolefin resin composition, the resin composition comprising a secondary antioxidant and substantially not including a primary antioxidant as an antioxidant and the method comprising extruding the polyolefin resin composition on a substrate by a melt extruder and coating at least a part of one surface or both surfaces of the substrate with the polyolefin resin composition.
